# EUROPÄISCHE PATENTSCHRIFT

(11) **EP 0 925 274 B1**
(45) Veröffentlichungstag und Bekanntmachung des Hinweises auf die Patenterteilung: **14.08.2002**
(21) Anmeldenummer: 97928236.5
(22) Anmeldetag: 18.06.1997
(51) Int. Cl.: C07C 219/08, C08F 210/02, C10L 1/22

(54) **FLIESSVERBESSERER FÜR ERDÖL-MITTELDESTILLATE**
FLOW IMPROVER FOR CRUDE-OIL MIDDLE DISTILLATES
AMELIORATEUR D'ECOULEMENT POUR DISTILLATS MOYENS DE PETROLE BRUT

(30) Priorität: 21.06.1996 DE 19624861
(43) Veröffentlichungstag der Anmeldung: 30.06.1999
(73) Patentinhaber: BASF AKTIENGESELLSCHAFT, 67056 Ludwigshafen (DE)
(72) Erfinder: DECKERS, Andreas, D-55234 Flomborn (DE); KLIMESCH, Roger, D-64665 Alsbach-Hähnlein (DE); OPPENLÄNDER, Knut, D-67061 Ludwigshafen (DE); MAHR, Norbert, D-67065 Ludwigshafen (DE); WENDEROTH, Bernd, D-68623 Lampertheim (DE); KNAUF, Wolfgang, D-67117 Limburgerhof (DE)
(74) Vertreter: Isenbruck, Günter, Dr.
(86) Internationale Anmeldenummer: EP9703183
(87) Internationale Veröffentlichungsnummer: WO9749666

(56) Entgegenhaltungen:
- DE-A- 4 333 680
- GB-A- 1 415 059
- US-A- 3 671 472
- Patent Abstracts of Japan, Band 96, Nr 5(-); & JP,A,803029 (SANYO CHEM IND LTD), 1996-01-09

## Beschreibung

Die Erfindung betrifft Ethylen/Vinylester/(Meth)acrylat-Copolymere, ein Verfahren zu ihrer Herstellung, die Verwendung der Copolymere als Fließverbesserer, insbesondere in Erdöl-Mitteldestillaten wie Dieselkraftstoffen und leichten Heizölen, sowie diese umfassende Brenn- und Treibstoffzusammensetzungen.

Erdöldestillate, insbesondere Mitteldestillate, wie Gasöle, Dieselöle oder Heizöle, die durch Destillation aus Erdölen gewonnen werden, weisen je nach Herkunft des Rohöls unterschiedliche Anteile an n-Paraffinen auf, die beim Abkühlen kristallisieren können. Dieser Punkt wird als Trübungspunkt oder Cloud Point (CP) bezeichnet. Bei weiterer Abkühlung bilden die plättchenförmigen n-Paraffinkristalle eine Art Kartenhausstruktur, so daß das Mitteldestillat (MD) stockt, obwohl der überwiegende Teil noch flüssig ist. Dieser Punkt wird als Stockpunkt bzw. Pour Point oder Pourpunkt bezeichnet. Durch die ausgefallenen Paraffine im Temperaturbereich zwischen Trübungs- und Stockpunkt wird die Fließfähigkeit, insbesondere von Kraftstoffen, erheblich beeinträchtigt. Die Paraffine verstopfen Filter und verursachen bei Kraftstoffen eine ungleichmäßige oder völlig unterbrochene Kraftstoffversorgung zum Motor. Ähnliche Störungen treten bei Heizölen auf.

Es ist bekannt, daß durch geeignete Zusätze zum Erdöldestillat das Kristallwachstum der Paraffine, insbesondere in Destillat-Kraftstoffen, modifiziert werden kann. Gut wirksame Additive verhindern einerseits, daß Paraffine in Mitteldestillaten derartige kartenhausähnliche Strukturen ausbilden und die Mitteldestillate bei Temperaturen von wenigen °C unterhalb der Temperatur, bei der die ersten Kristalle ausfallen, bereits fest werden. Andererseits bewirken diese Additive die Ausbildung feiner, gut kristallisierter, separater Paraffinkristalle, welche die Filter passieren können, so daß ein störungsfreier Kraftstofftransport sichergestellt ist.

US 3,048,479 betrifft die Verbesserung der Pourpunkt-Charakteristiken von Mitteldestillaten und der Fließfähigkeit bei niedrigen Temperaturen. Als Pourpunkt-Erniedriger wird ein Copolymer aus Ethylen und einem Vinylcarbonsäureester mit 3 bis 5 Kohlenstoffatomen im Säureteil beschrieben, das ein Molekulargewicht im Bereich von 1.000 bis 3.000 hat und 15 bis 25 Gew.-% des Vinylesters enthält. Insbesondere wird ein Ethylen/Vinylacetat-Copolymer beschrieben.

US 3,627,838 betrifft ein Verfahren zur Herstellung von Copolymeren aus Ethylen und Vinylacetat zur Verwendung als Pourpunkt-Erniedriger zur Verbesserung der Qualität von Mitteldestillaten. Das Copolymer enthält 28 bis 60 Gew.-% Vinylacetat und hat ein Molekulargewicht im Bereich von 2.000 bis 6.000.

EP-A1-0 405 270 betrifft ein Verfahren zur Verbesserung der Fließfähigkeit von Mineralölen und Mineralöldestillaten. Die Fließfähigkeit wird dabei verbessert durch Zusatz einer Mischung aus einem Ethylen/Vinylacetat-Copolymerisat und einem Ethylen/Vinylacetat/N-Vinylpyrrolidon-Terpolymerisat. Das Ethylen/Vinylacetat-Copolymerisat enthält 20 bis 40 Gew.-% Vinylacetat. Das Terpolymerisat enthält 15 bis 50 Gew.-% Vinylacetat und 0,5 bis 10 Gew.-% Vinylpyrrolidon. Bevorzugt werden Copolymerisat und Terpolymerisat im Gewichtsverhältnis von 3 : 1 bis 20 : 1 eingesetzt.

DE-A1-43 41 528 betrifft Copolymerisate auf Ethylenbasis und ihre Verwendung als Fließverbesserer in Erdöl-Mitteldestillaten. Die Copolymerisate bestehen dabei aus Ethylen, 4 bis 30 Gew.-% Vinylester von C₂₋₆-Monocarbonsäuren und 0,5 bis 20 Gew.-% von Vinylimidazol.

WO 95/09877 (DE-A-43 33 680) betrifft Copolymerisate auf Ethylenbasis und ihre Verwendung als Fließverbesserer in Erdöl-Mitteldestillaten. Die Copolymerisate bestehen aus Ethylen, Vinylestern von C₂₋₆-Monocarbonsäuren und Aminoalkylenacrylat, wobei die Aminogruppe über einen geradkettigen oder verzweigten C₂₋₆-Alkylenrest mit dem Acrylat verbunden ist und ansonsten Wasserstoffatome oder C₁₋₆-Alkylreste aufweist. Statt des Aminoalkylenacrylats kann auch Vinylimidazol verwendet werden.

JP-A 81/178188 betrifft Treibstofföladditive zur Verbesserung der Fließfähigkeit bei niedriger Temperatur. Das Additiv besteht aus einem Copolymer mit einem Molekulargewicht von 1.500 bis 5.000, das neben anderem aus einem Vinylester einer C₂₋₈-Carbonsäure, einem Acrylsäurederivat, das einen stickstoffhaltigen Substituenten aufweist, und Ethylen bestehen kann.

JP-A2 58080386 betrifft Fließverbesserer für Treibstofföle. Dazu werden Copolymere mit einem durchschnittlichen Molekulargewicht von 1.500 bis 5.000 verwendet, die aus Ethylen, Vinylacetat und N-Vinyl-2-pyrrolidon polymerisiert werden.

Weiterhin ist aus SU-A 399 063 die Herstellung von N-Ethanolmonoethylanilinmethacrylat durch Umsetzung von Methacrylsäure mit N-Ethanolmonoethylanilin in Gegenwart eines Veresterungskatalysators beschrieben.

In der DE-A 2 345 099 ist ein Verfahren zur Herstellung von AcrylsäureN-alkyl-N-arylaminoethylestern beschrieben.

In N. Schönfeldt, Grenzflächenaktive Ethylenoxidaddukte, wissenschaftliche Verlagsgesellschaft mbH, Stuttgart, 1. Auflage, Seiten 14 bis 33 und 70 bis 73 (1976) ist die Umsetzung von Aminen mit Alkylenoxiden zur Herstellung von Alkanolaminen beschrieben.

Eine Aufgabe der vorliegenden Erfindung ist die Bereitstellung eines Fließverbesserers für Erdöldestillate, insbesondere Mitteldestillate, der für eine Vielzahl von Erdöldestillaten wirksam ist.

Eine weitere Aufgabe der vorliegenden Erfindung ist die Bereitstellung eines Fließverbesserers, der gegenüber Ethylen/Vinylcarboxylat-Copolymeren das Absetzen ausgefallener Paraffinkristalle vermindert.

Eine weitere Aufgabe der vorliegenden Erfindung ist die Bereitstellung eines Fließverbesserers, der in einfacher Weise Erdöl-Mitteldestillaten zugesetzt werden kann.

Eine weitere Aufgabe der vorliegenden Erfindung ist die Bereitstellung von Fließverbesserern, die als konzentrierte Lösung eingesetzt werden können.

Eine weitere Aufgabe der vorliegenden Erfindung ist die Bereitstellung eines Fließverbesserers, der eine große Löslichkeit in Kohlenwasserstoffen aufweist.

Eine weitere Aufgabe der vorliegenden Erfindung ist die Bereitstellung eines Verfahrens zur Herstellung dieses Fließverbesserers.

Eine weitere Aufgabe der vorliegenden Erfindung ist die Bereitstellung eines diesen Fließverbesserer enthaltenden Konzentrats und von Brenn- und Treibstoffzusammensetzungen mit verbesserten Fließeigenschaften.

Diese und weitere Aufgaben werden gelöst durch die Bereitstellung eines Copolymers aus
(a) 30 bis 95,5 Gew.-% Ethylen,
(b) 4 bis 40 Gew.-% mindestens eines Vinylesters von C₂₋₆-Monocarbonsäuren,
(c) 0,5 bis 30 Gew.-% mindestens eines (Meth)acrylats der allgemeinen Formel (I) 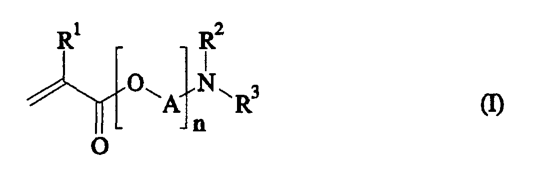 wobei
   n eine ganze Zahl von 1 bis 5 ist,
   der Rest R¹ ein Wasserstoffatom oder ein Methylrest ist, der Rest R² ein Phenylrest, der Rest R³ ein Ethylrest und
   der Rest A ein Ethylen rest ist,
(d) 0 bis 10 Gew.-% mindestens eines Monomers, das mit den Monomeren (a) bis (c) polymerisierbar ist.

Erfindungsgemäß wurde gefunden, daß Copolymere aus Ethylen, mindestens einem Vinylester und mindestens einem (Meth)acrylat, wie es nachstehend beschrieben ist, als Fließverbesserer für Erdöldestillate verwendbar sind und dabei den Erdöldestillaten bessere Eigenschaften verleihen, als dies bei der Verwendung von Ethylen/Vinylacetat-Copolymeren der Fall ist. Ausgefallene Paraffinkristalle lagern sich nicht mehr am Boden des Lagerbehälters ab.

Die erfindungsgemäßen Fließverbesserer sind in Erdölfraktionen unterschiedlichster Herkunft und Zusammensetzung erfolgreich einsetzbar.

Ein Abmischen mit anderen Fließverbesserern ist möglich.

Die erfindungsgemäßen Copolymere sind sehr gut löslich in Kohlenwasserstoffen, so daß konzentrierte Stammlösungen, gemäß einer Ausführungsform der Erfindung mindestens 50 gew.-%ig, herstellbar sind.

### Copolymere

Die erfindungsgemäßen Copolymere umfassen
(a) 30 bis 95,5 Gew.-% Ethylen,
(b) 4 bis 40 Gew.-% mindestens eines Vinylesters von C₂₋₆-Monocarbonsäuren,
(c) 0,5 bis 30 Gew.-% mindestens eines (Meth)acrylats der allgemeinen Formel (I) 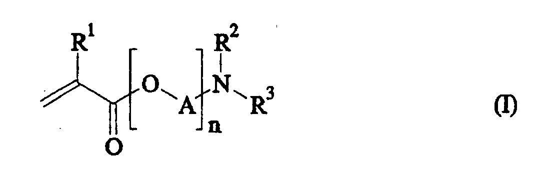 wobei
   n eine ganze Zahl von 1 bis 5 ist,
   der Rest R¹ ein Wasserstoffatom oder ein Methylrest ist,
   der Rest R² ein Phenylrest, der Rest R³ ein Ethylrest und
   der Rest A ein Ethylenrest ist,
(d) 0 bis 10 Gew.-% mindestens eines Monomers, das mit den Monomeren (a) bis (c) polymerisierbar ist,
wobei die Gesamtmenge der Monomere (a) bis (d) 100 Gew.-% ergibt.

Vorzugsweise beträgt die Menge an Monomer (a) 65 bis 94 Gew.-%, insbesondere 70 bis 88,5 Gew.-%. Die Menge an (b) beträgt vorzugsweise 4 bis 30 Gew.-%, insbesondere 8 bis 25 Gew.-%. Die Menge an (c) beträgt vorzugsweise 3 bis 20 Gew.-%, insbesondere 3,5 bis 10 Gew.-%.

Gemäß einer Ausführungsform beträgt das Gewichtsverhältnis von Komponente (b) zu (c) (0,1 bis 10) : 1, vorzugsweise (1 bis 5) : 1, insbesondere (2 bis 3) : 1.

Der Wert von n beträgt 1 bis 5, und ist insbesondere 1 oder 3,5.

Das Gewichtsmittel des Molekulargewichts der erfindungsgemäßen Copolymere beträgt gemäß einer Ausführungsform der Erfindung 300 bis 20.000, vorzugsweise 500 bis 10.000, bevorzugter 500 bis 5.000, besonders bevorzugt 1.000 bis 5.000, insbesondere 1.000 bis 3.000. Die Bestimmung des Molekulargewichts erfolgt dabei mittels Gelpermeationschromatographie.

Üblicherweise wird statt des Gewichtsmittels des Molekulargewichts die Schmelzviskosität des erhaltenen Copolymers bestimmt, die eine indirekte Aussage über das Molekulargewicht erlaubt.

Die Schmelzviskosität ist dabei bestimmt mittels Rotationsviskosimeter nach DIN 53019 bei 120 °C. Gemäß einer Ausführungsform der Erfindung weisen die Copolymere Schmelzviskositäten bei 120 °C von 100 bis 2.000, vorzugsweise 250 bis 1.000, insbesondere 260 bis 550 mm²/s (cst) auf.

### Komponente (a)

Als Monomerkomponente (a) wird Ethylen eingesetzt, beispielsweise wie es technisch erhältlich ist.

### Komponente (b)

Als Monomerkomponente (b) wird mindestens ein Vinylester von C₂₋₆-Monocarbonsäuren eingesetzt. Vorzugsweise werden Vinylacetat und Vinylpropionat oder ein Gemisch davon verwendet. Die Monocarbonsäuren können gemäß einer Ausführungsform der Erfindung verzweigtkettig sein, vorzugsweise sind sie jedoch linear. Sie können zudem Substituenten aufweisen, wie Halogenatome. Andere geeignete Substituenten sind dem Fachmann bekannt.

### Komponente (c)

Als Monomerkomponente (c) wird mindestens ein Acrylat oder Methacrylat der allgemeinen Formel (I) eingesetzt 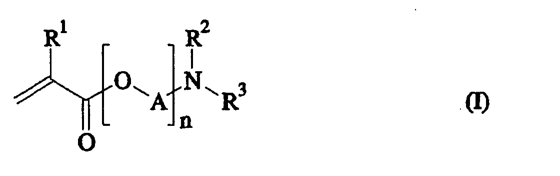 wobei
der Rest R¹ ein Wasserstoffatom oder ein Methylrest ist.

Dabei hat n den ganzzahligen Wert 1 bis 5, insbesondere 2 bis 5, ist der Rest R² ein Phenylrest, der Rest R³ ein Ethylrest und der Rest A ein Ethylenrest.

Bevorzugte Verbindungen sind N-Ethyl-N-phenylaminoethylacrylat bzw. die entsprechende Verbindung, die im Mittel etwa 3,5 Ethylenoxideinheiten aufweist.

### Herstellung der Komponente (c)

Die monomeren Acrylate bzw. Methacrylate der Komponente (c) können gemäß einer Ausführungsform der Erfindung hergestellt werden analog dem Verfahren, wie es in der SU-A 399 063 beschrieben ist. Dabei wird Acrylsäure bzw. Methacrylsäure mit N-Ethanolmonoethylanilin oder einer entsprechenden anderen Aminoverbindung in Gegenwart eines Veresterungskatalysators und eines Polymerisationsinhibitors umgesetzt. Beispielsweise kann die Umsetzung in Gegenwart von p-Hydroxydiphenylamin und Fe₂(SO₄)₃ in Xylol erfolgen.

Die Umsetzung kann auch gemäß dem in DE-A 2 345 099 beschriebenen Verfahren erfolgen. Dabei wird statt der Acrylsäure oder Methacrylsäure das entsprechende Säurechlorid oder ein Methyl- oder Ethylester eingesetzt. Die Umsetzung kann in Gegenwart organischer oder anorganischer Basen, wie Alkalimetallcarbonaten, Pyridin oder Triethylamin durchgeführt werden.

Die Alkanolamine, die in diesen Umsetzungen eingesetzt werden, können durch Umsetzung von Aminen mit Alkylenoxiden in an sich bekannter Weise erhalten werden. Beispielsweise ist ein geeignetes Verfahren beschrieben in N. Schönfeldt, Grenzflächenaktive Ethylenoxidaddukte, Wissenschaftliche Verlagsgesellschaft mbH, Stuttgart, 1. Auflage, Seiten 14 bis 33 und 70 bis 73 (1976). Zur Herstellung eines Acrylats mit 3,5 EO-Einheiten wird das entsprechende Anilinderivat mit 3,5 mol Ethylenoxid umgesetzt; das Reaktionsprodukt wird dann wie oben beschrieben verestert.

### Komponente (d)

Als Monomeren der Komponente (d) können solche Monomere verwendet werden, die mit den Monomeren (a) bis (c) copolymerisierbar sind. Beispiele solcher Monomere sind Propen, Buten, Penten, Hexen, Octen, Styrol, Acrylnitril, Maleinsäureanhydrid, Acrylsäure, Methacrylsäure, Alkylacrylate, wie Methyl-, Ethyl-, Propyl-, Butyl-, Hexylacrylat etc.

Vorzugsweise werden in den erfindungsgemäßen Copolymeren nur die Monomere der Komponente (a) bis (c) eingesetzt.

### Herstellung der Copolymere

Die Synthese der Copolymere erfolgt in an sich bekannter Weise durch Polymerisation der Monomere (a) bis (d) gemäß dem Hochdruck-Polyethylen-Verfahren. Ein solches Verfahren ist beispielsweise beschrieben in der DE-A-43 41 528.

Ein weiteres geeignetes Verfahren ist beschrieben in der deutschen Patentanmeldung mit dem Aktenzeichen 196 07 744.3.

Die Erfindung betrifft auch dieses Herstellungsverfahren, wobei in einem Rührautoklaven die Monomere (a) bis (d) radikalisch polymerisiert werden in Gegenwart mindestens eines Radikalbildners aus radikalisch zerfallenden, vorzugsweise organischen, Peroxiden, ggf. in Gegenwart eines Molekulargewichtsreglers.

Gemäß einer Ausführungsform werden die Monomeren ohne Lösungsmittel bei einem Druck von 50 bis 400 MPa, vorzugsweise 100 bis 300 MPa, und einer Temperatur von 150 bis 350 °C, vorzugsweise 180 bis 280 °C, in Gegenwart von Radikale bildenden Verbindungen polymerisiert. Die mittlere Verweilzeit beträgt im allgemeinen 60 bis 200 s.

Durch die Herstellungsweise bedingt enthalten die erfindungsgemäßen Copolymere neben den vorstehend aufgeführten Grundbausteinen geringe Mengen an Radikalbildnern und ggf. Molekulargewichtsreglern, die zum Starten bzw. Regeln der Polymerisation dem Monomerengemisch zugefügt werden. Diese Stoffe sind dabei zumindest teilweise in der Polymerhauptkette gebunden.

### Radikalbildner

Für die erfindungsgemäße Polymerisation können beliebige geeignete Radikalbildner eingesetzt werden. Gemäß einer bevorzugten Ausführungsform der Erfindung wird mindestens ein Radikalbildner, ausgewählt aus radikalisch zerfallenden, vorzugsweise organischen, Peroxiden eingesetzt.

Beispiele geeigneter Radikalbildner sind organische Peroxide, wie Perester, Perketale und Percarbonate.

Gemäß einer Ausführungsform der Erfindung ist der Radikalbildner mindestens ein Peroxid, ausgewählt aus Di-tert.-butylperoxid, tert.-Butylperoxipivalat, tert.-Butylperoxi-3,5,5-trimethylhexanoat und tert.-Butylperisononanoat. Andere Peroxide mit ähnlichen Zerfallskonstanterten sind ebenfalls einsetzbar. Bevorzugt gemäß einer Ausführungsform der Erfindung ist ein Gemisch aus zwei Gewichtsteilen tert.-Butylperoxipivalat und fünf Gewichtsteilen tert.-Butylperoxi-3,5,5-trimethylhexanoat.

Gemäß einer bevorzugten Ausführungsform der Erfindung wird das Monomerengemisch mit 10 bis 1.000 Mol-ppm (bezogen auf sämtliche Monomere), vorzugsweise 20 bis 100 Mol-ppm, des Radikalbildners polymerisiert.

### Molekulargewichtsregler

Als Molekulargewichtsregler können gemäß einer Ausführungsform der Erfindung aliphatische und olefinische Kohlenwasserstoffe, wie auch vorzugsweise aliphatische Aldehyde, insbesondere Propionaldehyd, verwendet werden. Auch organische SH-Gruppen enthaltende Verbindungen können verwendet werden, wobei die Menge im allgemeinen bei 0,1 bis 5 Gew.-%, bezogen auf die Gesamtmenge an Monomeren, beträgt.

Die erhaltenen Copolymerisate können gemäß einer Ausführungsform der Erfindung ohne weitere Aufarbeitung in den Erdöl-Mitteldestillaten eingesetzt werden.

Nicht polymerisierte Monomere können, sofern vorhanden, im Produkt verbleiben.

Die Molekulargewichtsbestimmung des Polymers erfolgt wie vorstehend beschrieben über die Bestimmung seiner Viskosität.

### Verwendung der Copolymere

Die erfindungsgemäßen Copolymere können erfindungsgemäß als Fließverbesserer verwendet werden, insbesondere als Fließverbesserer in Erdöldestillaten, vorzugsweise in Brenn- und Treibstoffzusammensetzungen, insbesondere in Mitteldestillaten wie Dieselkraftstoffen und leichten Heizölen.

Gemäß einer Ausführungsform der Erfindung werden sie in Form eines Lösungskonzentrats eingesetzt.

### Konzentrat

Die erfindungsgemäßen Copolymere können dem Mitteldestillat direkt, vorzugsweise aber als 5 bis 80 gew.-%ige Lösungen einverleibt werden.

Geeignete Lösungsmittel und Additivmengen sind weiterhin in der DE-A 43 41 528 beschrieben.

Die erfindungsgemäßen Copolymere können in einer großen Menge in einem Kohlenwasserstofflösungsmittel gelöst werden. Dabei können Lösungen mit 5 - 80 Gew.-%, vorzugsweise 20 - 70 Gew.-%, insbesondere bis zu 40 - 60 Gew.-%, des erfindungsgemäßen Copolymers im Kohlenwasserstofflösungsmittel hergestellt werden.

Als Lösungsmittel werden dabei erfindungsgemäß beispielsweise aliphatische oder aromatische Lösungsmittel verwendet, wie Xylol, oder deren Gemische, weiterhin hochsiedende Aromatengemische sowie Mitteldestillate, insbesondere gemäß einer Ausführungsform Solvesso®, vertrieben von Esso.

Die Herstellung der Konzentrate erfolgt durch Eintragen des erfindungsgemäßen Copolymers in das Lösungsmittel unter Rühren bei Raumtemperatur.

Bei einer 50 gew.-% igen Lösung in Solvesso wurde auch nach langer Lagerzeit kein Abscheiden der Copolymere beobachtet.

Die Konzentrate können verwendet werden zur Herstellung von Brenn- und Treibstoffzusammensetzungen.

### Brenn- und Treibstoffzusammensetzungen

Die erfindungsgemäßen Brenn- und Treibstoffzusammensetzungen umfassen eine Hauptmenge eines Brenn- und Treibstoffs und eine zur Verbesserung der Fließeigenschaften wirksame Menge eines Copolymers, wie es vorstehend beschrieben ist.

Gemäß einer Ausführungsform der Erfindung umfaßt die Brenn- und Treibstoffzusammensetzung dabei ein Mitteldestillat und 10 bis 10.000 Gew.-ppm vorzugsweise 50 bis 1000 ppm.-%, insbesondere 100 bis 500 Gew.ppm, des Copolymers, bezogen auf das Gesamtgewicht der Zusammensetzung.

Die Verbesserung der Fließeigenschaften des Mitteldestillats kann dabei nach DIN EN 116 als Erniedrigung des "Cold Filter Plugging Point (CFPP)" bestimmt werden.

Unter Erdöl-Mitteldestillaten werden Petroleum, Heizöl und Dieselkraftstoffe mit einer Siedetemperatur von etwa 150 bis 400°C verstanden.

Je nach Verwendungszweck können die Mitteldestillate noch weitere Additive enthalten, wie weitere Fließverbesserer, Dispergatoren, Anti-Schaum-Mittel, Korrosionsschutzmittel, Antioxidantien, Leitfähigkeitsverbesserer und Farbstoffe.

### BEISPIELE

### Herstellung der Copolymere

Ethylen, Vinylpropionat und N-Ethyl-N-Phenylaminoethylacrylat oder die entsprechende Verbindung mit durchschnittlich 3,5 Ethylenoxid-Einheiten werden unter Zusatz von Propionaldehyd als Regler in einem gerührten Autoklaven bei 1.500 bar und einer Temperatur von 220°C polymerisiert. Die radikalische Initiierung der Polymerisation erfolgt dabei durch kontinuierliche Dosierung einer Isododecan-Lösung von 0,2 Gew.-% tert.-Butylperoxipivalat und 0,5 Gew.-% tert.-Butylperoxi-3,5,5-trimethylhexanoat. Der Autoklav hat dabei ein Innenvolumen von 1 l und ein Längen/Durchmesser-Verhältnis von 5 : 1. Die mittlere Verweilzeit des Reaktionsgemisches im Reaktor beträgt ca. 90 s. Der Rührautoklav wurde kontinuierlich betrieben. In der nachfolgenden Tabelle 1 ist die Zusammensetzung der nach der vorstehenden Vorschrift hergestellten Copolymerisate angegeben. In Beispielen A1 bis A8 wurde dabei N-Ethyl-N-phenylaminoethylacrylat (NENHEA) als Acrylatmonomer eingesetzt, in Beispielen A9 und A10 die entsprechende Verbindung mit 3,5 Ethylenoxid-Einheiten. Ein Vergleichs-Copolymer V1 wurde ohne Verwendung des erfindungsgemäßen (Meth)acrylats nur aus Vinylpropionat und Ethylen hergestellt. Die angegebene Viskosität wurde nach DIN 53.019 bei 120 °C bestimmt.

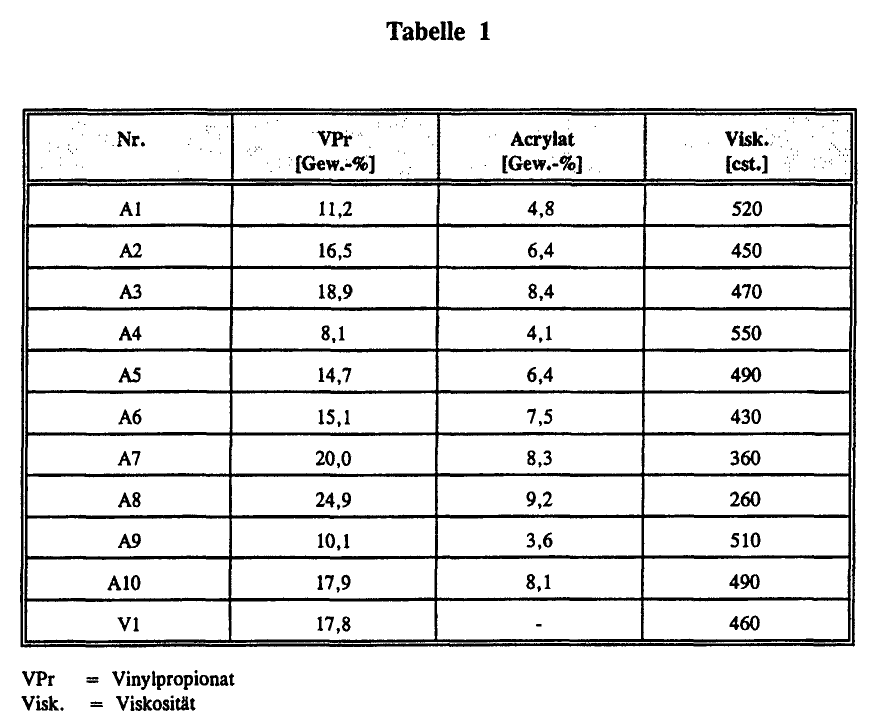

### Brenn- und Treibstoffzusammensetzungen

Die erfindungsgemäßen Copolymere A1 bis A8 und das Vergleichscopolymer V1 wurden in einer Reihe von Brenn- und Treibstoffzusammensetzungen geprüft, die Erdöl-Mitteldestillate waren. Es handelte sich dabei um Dieselkraftstoffe in handelsüblicher deutscher Raffineriequalität. Sie weisen die in der nachstehenden Tabelle 2 angegebenen Eigenschaften auf.

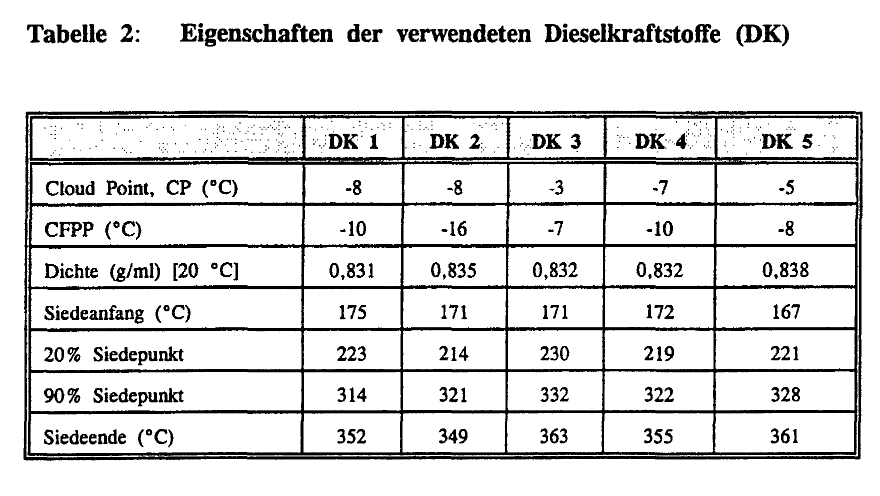

Dabei ist der Cloud Point (CP) nach ASTM D 2500 und der "Cold Filter Plugging Point" (CFPP) nach DIN EN 116 bestimmt worden.

Der 20%-Siedepunkt und 90%-Siedepunkt ist die Temperatur, bei der 20 Vol.-% bzw. 90 Vol.-% des Ausgangsgemisches abdestilliert sind.

Die vorstehenden Erdöl-Mitteldestillate (Dieselkraftstoffe) wurden mit den Fließverbesserern A1 bis A8 und V1 versetzt, die in 50%iger Lösung im Lösungsmittel Solvent-Naphtha eingesetzt wurden. Dabei wurden die Mitteldestillate mit den entsprechenden Mengen der Additivkonzentrate unter Rühren bei Raumtemperatur versetzt.

Die so additivierten Mitteldestillate wurden in 100 ml fassenden Meßzylindern für 20 h in einem Kälteschrank bei -13 °C gelagert. Anschließend wurden visuell Volumen und Aussehen sowohl der sedimentierten Paraffinphase als auch der darüberstehenden Ölphase bestimmt und beurteilt. Zusätzlich wurde für jede Probe der "Cold Filter Plugging Point" (CFPP) nach DIN EN 116 gemessen.

Die Ergebnisse sind für die Mitteldestillate (Dieselkraftstoffe) DK 1 bis DK 5 in den nachstehenden Tabellen 3 bis 7 angegeben.

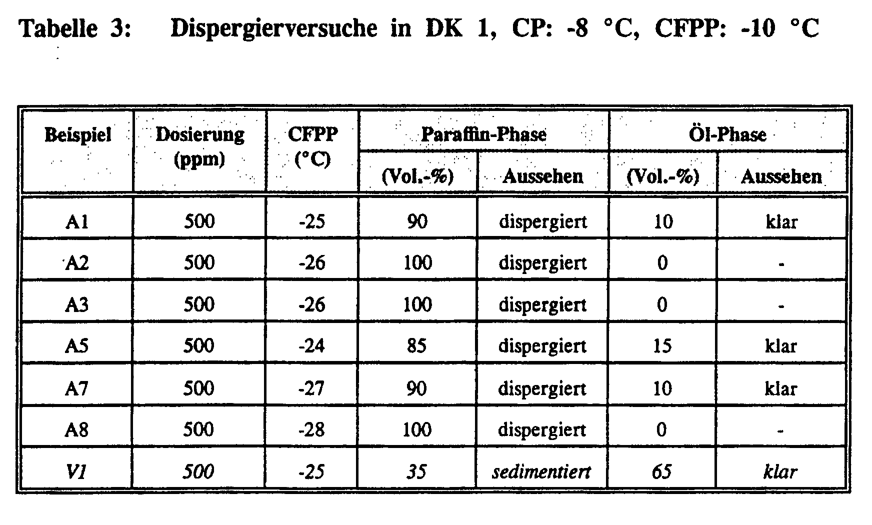

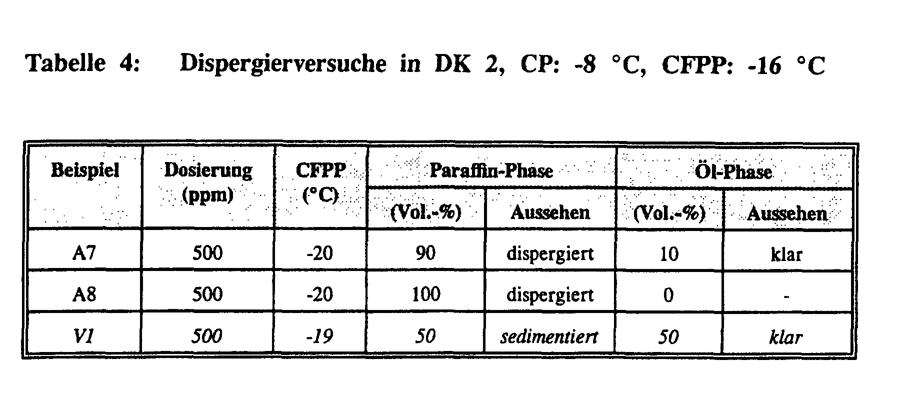

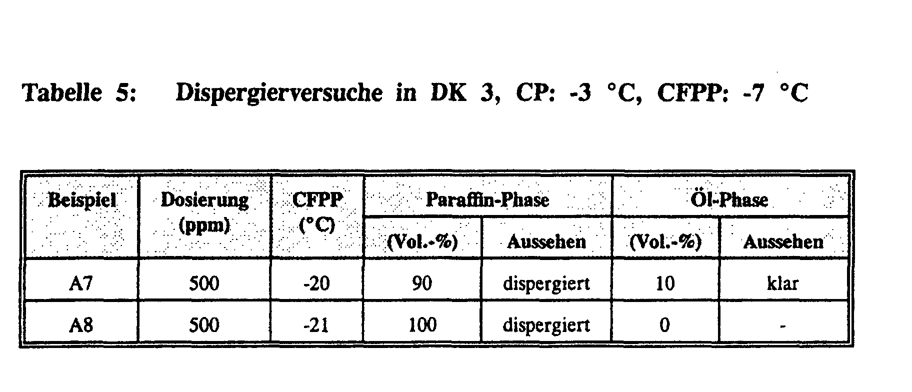

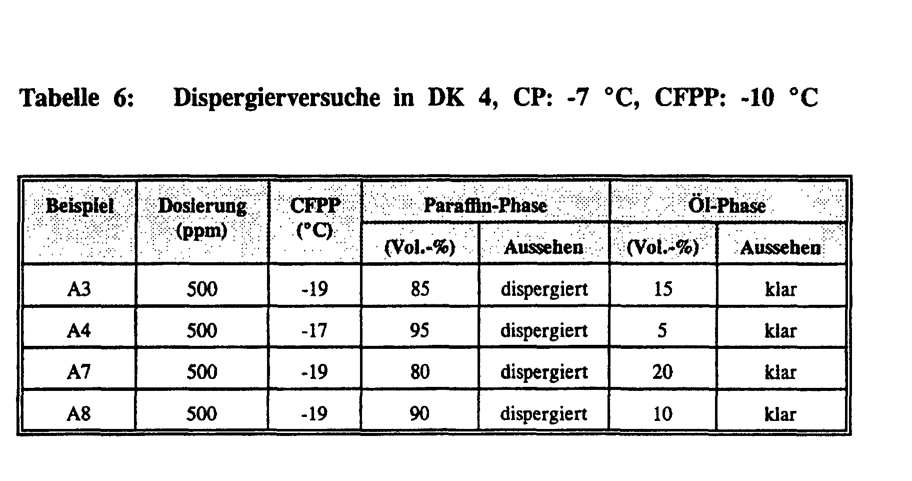

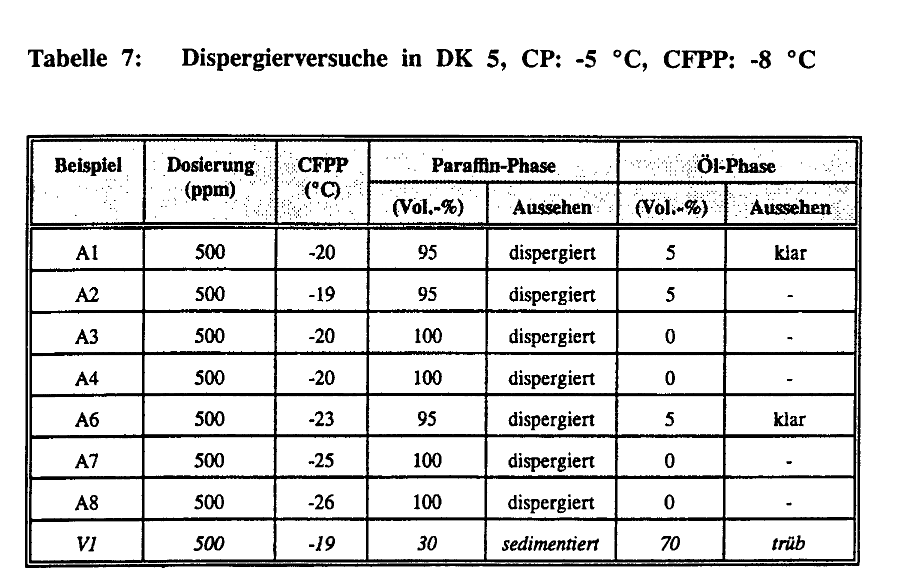

Aus den Tabellen ist zu entnehmen, daß die erfindungsgemäßen Copolymere (Beispiele A1 bis A8) in sämtlichen Dieselkraftstoffen sowohl zu einer Absenkung des CFPP führen als auch eine sehr gute Dispergierung der n-Paraffine ermöglichen. Dagegen zeigt die Verwendung des Vergleichspolymers V1 nur eine Wirkung auf den CFPP, jedoch keine dispergierende Wirkung auf die n-Paraffine.

## Patentansprüche

1. Copolymer aus
(a) 30 bis 95,5 Gew.-% Ethylen,
(b) 4 bis 40 Gew.-% mindestens eines Vinylesters von C₂₋₆-Monocarbonsäuren,
(c) 0,5 bis 30 Gew.-% mindestens eines (Meth)acrylats der allgemeinen Formel (I) 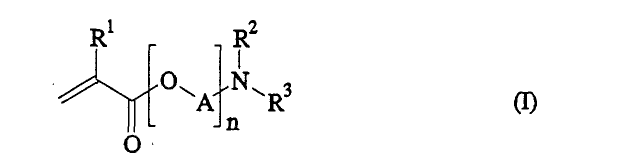 wobei n eine ganze Zahl von 1 bis 5 ist, der Rest R² ein Phenylrest ist, der Rest R³ ein Ethylrest ist und der Rest A ein Ethylenrest ist,
der Rest R¹ ein Wasserstoffatom oder ein Methylrest ist,
(d) 0 bis 10 Gew.-% mindestens eines Monomers, das mit den Monomeren (a) bis (c) polymerisierbar ist.

2. Verfahren zur Herstellung von Copolymeren nach Anspruch 1 , wobei in einem Rührautoklaven die Monomere (a) bis (d) radikalisch polymerisiert werden in Gegenwart mindestens eines Radikalbildners aus radikalisch zerfallenden, vorzugsweise organischen, Peroxiden, ggf. in Gegenwart eines Molekulargewichtsreglers.

3. Verwendung von Copolymeren nach Anspruch 1 als Fließverbesserer, bevorzugt in Erdöldestillaten, vorzugsweise Brenn- und Treibstoffzusammensetzungen, insbesondere Erdöl-Mitteldestillaten.

4. Konzentrat, umfassend 5 bis 80 Gew.-% eines Copolymers nach Anspruch 1, gelöst in einem Kohlenwasserstoff-Lösungsmittel.

5. Verwendung eines Konzentrats nach Anspruch 4 zur Herstellung von Brenn- und Treibstoffzusammensetzungen.

6. Brenn- und Treibstoffzusammensetzung, umfassend eine Hauptmenge eines Brenn- und Treibstoffs und eine zur Verbesserung der Fließeigenschaften wirksame Menge eines Copolymers nach Anspruch 1 oder eines Konzentrats nach Anspruch 4.

## Claims

1. A copolymer comprising
(a) from 30 to 95.5% by weight of ethylene,
(b) from 4 to 40% by weight of at least one vinyl ester of C₂-C₆-monocarboxylic acids,
(c) from 0.5 to 30% by weight of at least one (meth)acrylate of the general formula (I) 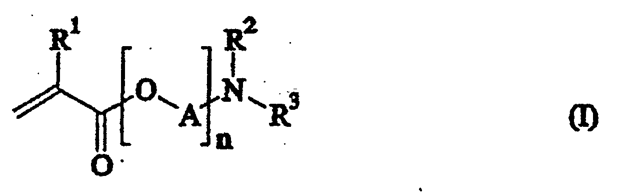 where n is an integer from 1 to 5, R² is phenyl, R³ is ethyl and A is ethylene, R¹ is hydrogen or methyl,
(d) from 0 to 10% by weight of at least one monomer which is polymerizable with the monomers (a) to (c).

2. A process for the preparation of a copolymer as claimed in claim 1, wherein the monomers (a) to (d) are subjected to free radical polymerization in a stirred autoclave in the presence of at least one free radical initiator comprising preferably organic peroxides which decompose to give free radicals, in the presence or absence of a molecular weight regulator.

3. The use of a copolymer as claimed in claim, 1 as a flow improver, especially in mineral oil distillates, preferably combustion and power fuel compositions, in particular mineral oil middle distillates.

4. A concentrate comprising from 5 to 80% by weight of a copolymer as claimed in claim 1, dissolved in a hydrocarbon solvent.

5. The use of a concentrate as claimed in claim 4 for the preparation of combustion and power fuel compositions.

6. A combustion or power fuel composition comprising a principal amount of a combustion or power fuel and a copolymer as claimed in claim 1 or a concentrate as claimed in claim 4 in an amount effective for improving the flow properties.

## Revendications

1. Copolymère constitué
(a) de 30 à 95,5 % en poids d'éthylène,
(b) de 4 à 40 % en poids d'au moins un ester vinylique d'acides monocarboxyliques en C₂₋₆,
(c) de 0,5 à 30 % en poids d'au moins un (méth)acrylate de formule générale (I) 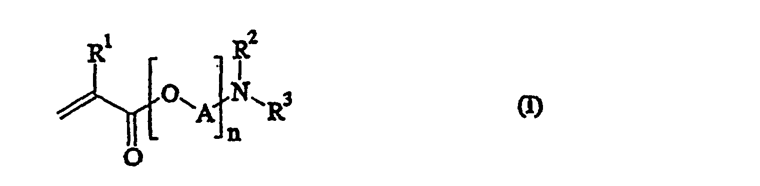 dans laquelle
n est un nombre entier de 1 à 5, le radical R² est un radical phényle, le radical R³ est un radical éthyle, et le radical A est un radical éthylène,
le radical R¹ est un atome d'hydrogène ou un radical méthyle,
(d) de 0 à 10 % en poids d'au moins un monomère polymérisable avec les monomères (a) à (c).

2. Procédé de préparation de copolymères selon la revendication 1, dans lequel, dans un autoclave agitateur, les monomères (a) à (d) subissent une polymérisation radicalaire en présence d'au moins un agent formant des radicaux, choisi parmi les peroxydes, de préférence organiques, se décomposant par voie radicalaire, éventuellement en présence d'un régulateur de masse moléculaire.

3. Utilisation de copolymères selon la revendication 1 en tant qu'agent améliorant l'écoulement, de préférence dans les distillats pétroliers, de préférence dans les compositions de combustibles et carburants, en particulier dans des distillats pétroliers moyens.

4. Concentré comprenant de 5 à 80 % en poids d'un copolymère selon la revendication 1, dissous dans un solvant hydrocarboné.

5. Utilisation d'un concentré selon la revendication 4 pour préparer des compositions de combustibles et carburants.

6. Compositions de combustibles et carburants comportant une quantité principale d'un combustible et d'un carburant, et une quantité ayant pour effet d'améliorer les propriétés d'écoulement d'un copolymère selon la revendication 1 ou d'un concentré selon la revendication 4.
